# EUROPEAN PATENT SPECIFICATION

(11) **EP 2 170 748 B1**
(45) Date of publication and mention of the grant of the patent: **18.08.2010**
(21) Application number: 08766772.1
(22) Date of filing: 04.06.2008
(51) Int. Cl.: B65G 47/90, B25J 15/00

(54) **GRIPPER**
GREIFER
DISPOSITIF DE PRÉHENSION

(30) Priority: 04.06.2007 EP 07075428
(43) Date of publication of application: 07.04.2010
(73) Proprietor: FPS Food Processing Systems B.V., 2631 RE Nootdorp (NL)
(72) Inventor: CREZEE, Leonardus Paulus, 3425 ET Snelrewaard (NL)
(74) Representative: Hatzmann, Martin
(86) International application number: PCT/NL2008/050349
(87) International publication number: WO 2008/150164

(56) References cited:
- EP-A- 1 645 374
- EP-B- 1 009 695
- US-A- 3 412 542
- US-A- 3 483 687

## Description

The invention relates to an apparatus as represented in the preamble of claim 1.

Such a gripper is known from, for instance, EP687508. In this publication, a gripper is described which is generally built-in in series with identical grippers in an endless conveyor. Further, it is elucidated how such a conveyor is used for sorting in particular fruit products, wherein the grippers take up the products from a feed conveyor and then, after weighing, release them with such a gripper to a packaging track intended thereto. Such grippers comprise in particular two hand-shaped gripper surfaces provided opposite each other. These gripper surfaces have dimensions and are made of materials which are eminently suitable for treating such delicate products.

In EP1009695, also, a gripper for such purposes is described, wherein the ends of the gripper surfaces used there are designed as separate units which are rotatable about a horizontal axis. Such a construction offers the possibility to rotate the product about an imaginary axis set upon gripping in order to thus be able to observe the surface from all sides.

Such grippers are in particular suitable for taking up products from rollers wherein the relative movement of the feed conveyor and the grippers is directed substantially vertically away from each other. For the situations where the products are not fed by rollers but lie in, for instance, cups, such as described in, for instance, EP108445, more particularly for products such as pears and cucumbers, gripping from cups is virtually impossible.

In order to remedy such a shortcoming, the gripper according to the present invention is **characterized in that** at the location of the points of contact, the gripper comprises at least two engaging strips extending substantially mutually parallel and opposite each other, wherein these strips are connected to a drive system with which each of the two strips is driven independently, so as to be movable in substantially the parallel direction mentioned.

With great advantage, with such a gripper, in each position of the gripper, products can be taken up and released again from and out of any conveying element, i.e. a flat conveyor belt, a roller conveyor, boxes or cups.

According to a further exemplary embodiment, the gripper is **characterized in that** the strips are guided over at least a single pair of two material ends extending opposite each other as fingers, wherein the fingers are movable towards each other and away from each other for engaging and releasing, respectively.

In a suitable manner, fingers can be comprised in numbers of more than two, and also in more than one pair, so that many possibilities of gripping, taking up, releasing and rotating can be utilized.

In yet another exemplary embodiment, the gripper is **characterized in that**
the fingers comprise ends in the form of guide rollers for guiding the said strips;
the fingers are movable relative to each other in the parallel direction mentioned;
three strips are comprised, wherein the ends of the strips, intended for engaging and taking up, are located in and are substantially evenly distributed over a circle in a plane;
in the circle, the ends are at mutual angles of substantially 120°;
the gripper is further connected to a control for controlling the drive system, wherein the strips are movable for engaging and taking up, delivering and/or rotating such an engaged product, and/or
together, the strips compose a single endless strip, wherein the strip is guided by the drive system that comprises an assembly of rollers and guides, wherein at least one roller is driven.

In yet another exemplary embodiment, the gripper is **characterized in that** the control is further connected to a camera system for making at least one single image, with which the control controls engaging and taking up, delivering and/or rotating.

In a highly suitable manner, with such a single image, a combination of images from several directions, or also with video-images, the control of the gripper can be fed so that the gripper will follow an accurately mapped path.

In yet a further embodiment, the gripper is **characterized in that** at least one roller or guide is movable relative to the other one.

With this, in a highly suitable manner, products can be engaged, taken up and delivered at an angle.

The present invention further relates to a robot for taking up, transferring and placing delicate products, for instance fruit or vegetables, more particularly apples, pears or cucumbers, with at least a single robot arm, having at its end a gripper according to any one of the preceding features.

In a highly advantageous manner, robots equipped with at least one such gripper can treat and process all sorts of different types of products, in particular in an environment for sorting and packaging thereof.

In addition, the present invention relates to a method for engaging, taking up, transporting and delivering delicate products, for instance fruit or vegetables, more particularly apples, pears or cucumbers, with a gripper, wherein the gripper is provided with at least two strips extending substantially in mutual parallel direction which are independently movable in substantially the above-mentioned parallel direction, wherein the method comprises the following steps:
(a) moving the strips in a direction of engagement to a product,
(b) positioning the strips adjacent corresponding sides of the product,
(c) then clamping the products between the strips mentioned,
(d) after this, in a take-up direction T, directed substantially opposite to the direction of engagement, moving at least one of the strips mentioned,
(e) moving the gripper with the taken up product to a set delivery position;
(f) delivering the product.

With great advantage, products such as fruits, in all their diversity of form and properties, can be treated and processed in any sorting and packaging environment without damaging these products.

Further elaborations of the method according to the invention are **characterized in that**
clamping takes place by sliding the strips over the product in a clamping manner;
clamping takes place by moving the strips together, whereby the product is clamped between the strips;
delivering comprises moving the strips apart;
delivering comprises moving at least one of the strips in the direction of engagement;
delivering comprises a combination of the features as mentioned above;
the method further comprises rotating the taken up product wherein the strips mentioned are moved relative to each other at different speeds; and/or the method is carried out with the gripper according to one of the above-mentioned features.

In the following, the invention will be elucidated with reference to a drawing, in which
Figs. 1- 4 schematically show an exemplary embodiment of the gripper according to the present invention wherein different situations for clamping, engaging and taking up, rotating, respectively, and a further variant, and
Figs. 5a, b, c schematically show a second exemplary embodiment of the gripper according to the invention for three different situations. In these Figures, the same parts have the same reference numerals.

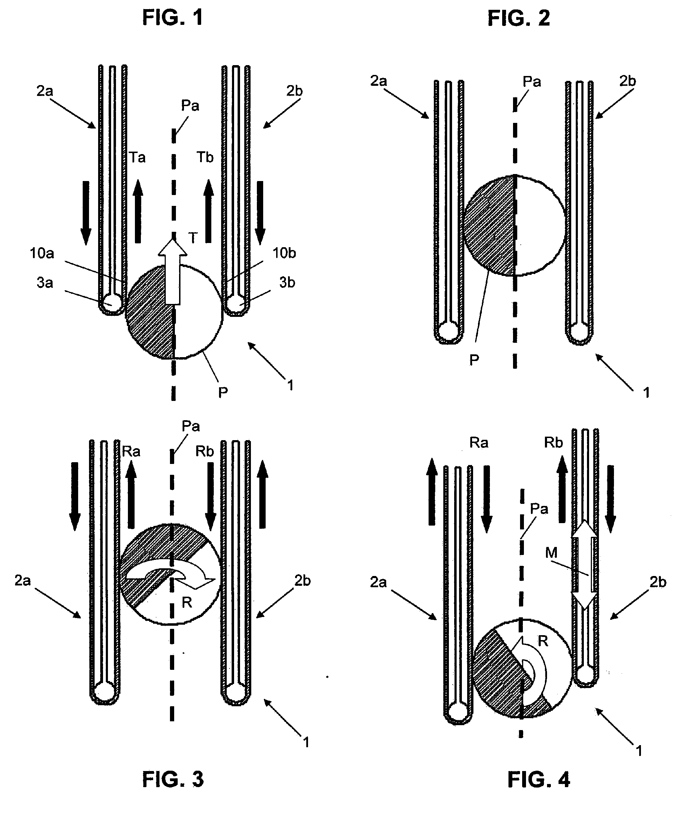

Fig. 1 shows a schematic view of a cross section wherein a product P has just been clamped on both sides between two fingers 2 a, b of a gripper 1, wherein the two fingers 2 a, b comprise material ends 3 a, b which guide strips 10 a, b. These fingers 2 a, b are substantially parallel, and also the strips 10 a, b are substantially parallel in an imaginary direction pa (parallel), hereinafter called the parallel direction. For this situation, it is further indicated that for taking up in a take up direction T, these strips 10 a, b, are moved in the directions Ta and Tb, respectively, on the sides of the product P. Further, each product is schematically represented divided into two halves to thus be able to better follow the movements of such a product. This taking up in the take up direction T takes place after a movement of approach and engaging in a direction of engagement. This approach direction A is not represented in the depicted Figures but is understood to be substantially opposite to the take up direction T in the situations just before and after engaging and taking up.

In Fig. 2, in the same schematic manner, the result of a movement according to Fig. 1 is shown. Here, it can be seen that the position of the product P does not change relative to the parallel direction pa.

In Fig. 3, in a similar schematic manner, it is indicated that in the situation represented in Fig. 2, rotation of the product in a direction R is obtained by moving the strips 10 a, b according to Ra and Rb, respectively. Changing the position of the product halves shows in which direction the rotation takes place. This situation can be indicated as movements at different speeds (viewed as vectors), wherein the direction of the vectors differs while the magnitude of the speeds is equal. It will be clear to all skilled in the art that such a rotation can also be obtained in a different manner, i.e. by driving the strips and the fingers differently.

In the same schematic manner, in Fig. 4, the situation is drawn wherein after clamping, taking up and rotating between the two fingers 2 a, b, the situation drawn is formed, more particularly wherein furthermore the finger 2 b as a whole is moved relative to the parallel direction pa, with, in this case, the upward direction according to arrow M (moving) in the finger.

For anyone skilled in the art it will be clear that also after taking up according to Figs. 1 and 2, this movement can be used for the purpose of just rotating, wherein the strips 10 a, b need not be used. Many combinations of the movements are possible for obtaining different positions and orientations. Here, too, the product halves show in which direction the rotation of the product takes place. Furthermore, it will be clear to all skilled in the art that with such an unequal starting position, products can be clamped and then engaged and taken up at an angle, for instance between a horizontal plane and the parallel direction pa. In an advantageous manner, this provides the possibility to take up products located in corners of the conveying units.

Although the principle of engaging, taking up, rotating and delivering is thus completely explained, it will be clear to all skilled in the art that there are many possibilities to realize such a construction as well as that combinations of fingers and movements as shown can give many possible situations with corresponding positions for such a product.

More in detail, it will be clear to all skilled in the art that the strips 10 a, b can each be separately driven, but can also be designed as a single endless strip and be guided and moved by a suitable drive system. Drive rollers and roller guides can, for instance, be utilized wherein a single or several of these parts can be moved by their axis. Such movements can be controlled with a control connected to the drive system. In the Figures according to this application, the strips are all shown only partly, in particular the part where engaging is concerned.

While in the Figures 1 - 4 only a single pair of fingers 2 a, b is represented, several pairs of fingers can be utilized, located relative to the plane of the drawing in just as many successive planes. It is thus possible to suitably take up and rotate elongated products such as cucumbers or also certain varieties of pears.

With these several pairs of fingers, it is further possible to have such an elongated product take a slanting position relative to a horizontal plane. In particular such a position can be of great advantage with further processing, for instance packaging in boxes positioned with a slant.

Although in the above given description, each time, strips 10 a, b are mentioned as engaging parts for such a gripper, this indication should not be read to be limitative. It is expressly mentioned here that the width of such strips 10 a, b, can be selected suitably and purposefully. Not only can wider strips of, for instance, a few centimetres be utilized, but also very narrow, cordlike strips can highly advantageously be utilized. In this latter case, the contact surface will then be minimal. Furthermore, the strips 10 a, b can be guided over specially formed wheels and guides to thus guarantee a suitable centering of the strips 10 a, b.

Not represented in the Figures is the use of a camera system. This can mean that with one or several cameras, shots can be made that together compose a complete image of the product in the situation upon engagement, but also a stream of images can be utilized obtained with, for instance, a video camera. These image signals can feed the control such that, in accordance with paths, calculated with the image signals, the gripper engages, clamps and takes up the products. It will be clear to all skilled in the art that precisely with this combination of gripper, drive system, control and camera system, a highly advantageous system for processing products such as fruits or vegetables is obtained.

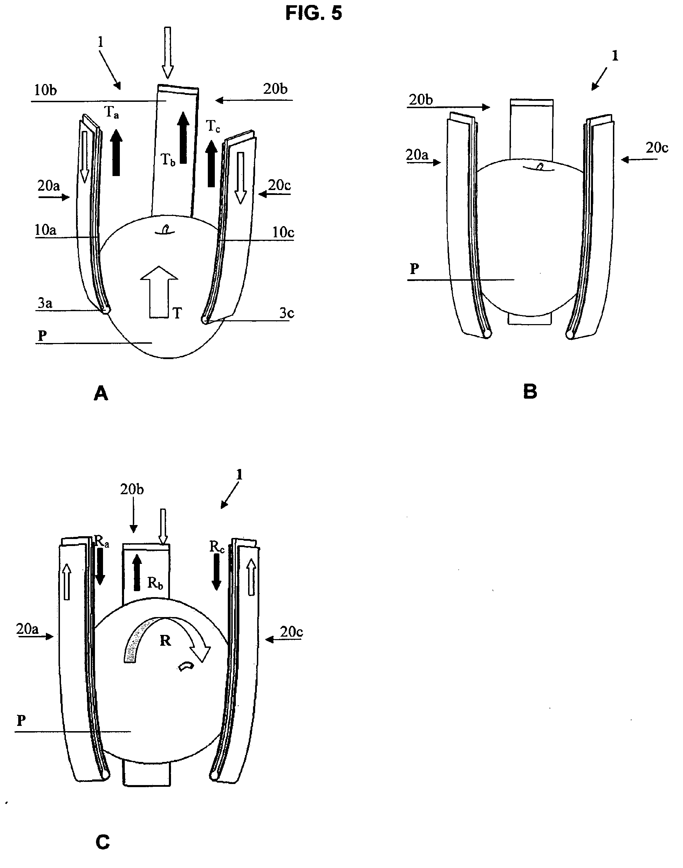

In Figs. 5 a, b, c, in perspective, another exemplary embodiment of the gripper according to the invention is shown. Here, it is represented that not pairs, but threesomes of fingers are used, 20 a, b, c, wherein the ends of the fingers, more particularly the strips, end on a circle in a plane and are substantially evenly distributed over the circle, for instance at angles of approximately 120° relative to each other. Here, too, the fingers 20 a, b, c extend substantially parallel to each other.

In Fig. 5a is shown the situation of clamping a product P, for instance an apple with schematically a stalk, while in the same manner as in Fig. 2, upon movement of each strip 20 a, b, c in the direction T according to Ta, Tb, Tc, the product, after clamping, is engaged and taken up, and is then slightly raised as shown in Fig. 5b.

In Fig. 5c, with an arrow R, and more particularly the arrows Ra, Rb and Rc, rotation is shown. Rotating the product P can now, for instance with the camera system as discussed hereinabove, be recognized by the change of the position of the stalk of the product.

It will be clear to all skilled in the art that for this exemplary embodiment too, several situations can be realized by carrying out combinations of movements and orientations.

In a highly suitable manner, such a gripper, or a combination of grippers, can be utilized as hand of a robot, for instance a robot with arms of which many types are generally known. Such a robot, or also several robots next to and opposite each other, can thus take products P, located in many orientations on a conveyor belt, therefrom and then place them in a package.

Where in the above mentioned is made of clamping, engaging, taking up and rotating, it should also be mentioned that delivering will take place in opposite order. Also as described hereinabove, many combinations of movements and orientations are possible for providing a similar result. A further possibility is for instance the approach of the product in a manner such that the grippers are spaced apart at a distance approximately equal to the diameter of the product to be taken up. Here, engaging with an advancing movement of the gripper as a whole in the direction of engagement implies at the same time clamping. As soon as the first contact is made, the strips themselves can be put into motion.

It will be clear to all skilled in the art that here too, upon delivering, the reversed order is possible, also in a situation wherein the gripper is for instance a few centimetres above a delivery position.

It will further be clear to all skilled in this field of technology that many variants of the gripper and the method as described hereinabove are understood to fall within the attached claims.

## Claims

1. A gripper for gripping, clamping, taking up and delivering delicate products (P), for instance fruit or vegetables, more particularly apples, pears or cucumbers, wherein each product is taken up with the gripper (1) from a substantially horizontal lying position, wherein the gripper (1) comprises at least two engaging surfaces and wherein upon engagement and taking up, the product is in contact with the gripper at the location of at least two points of contact,
**characterized in that**,
at the location of the points of contact, the gripper comprises at least two engaging strips (10a,b), extending substantially mutually parallel and opposite each other, wherein these strips (10a, b) are connected to a drive system with which each of the two strips is independently driven so as to be movable in substantially the said parallel direction.

2. A gripper according to claim 1, **characterized in that** the said strips are guided over at least a single pair of two material ends (3a, b) extending opposite each other as fingers (2a, b), wherein the fingers are movable towards and away from each other for engaging and releasing, respectively.

3. A gripper according to claim 2, **characterized in that** the fingers comprise ends in the form of guide rollers for guiding the said strips.

4. A gripper according to any one of the preceding claims, **characterized in that** the fingers are movable relative to each other in the said parallel direction.

5. A gripper according to any one of the preceding claims, **characterized in that** three strips are comprised, wherein the ends of the strips, intended for said engaging and taking up, are located on and are substantially evenly distributed over a circle in a plane.

6. A gripper according to claim 5, **characterized in that** in the circle, the ends are at mutual angles of substantially 120°.

7. A gripper according to any one of the preceding claims, **characterized in that** the gripper is further connected to a control for controlling the drive system, wherein the strips are movable for engaging, clamping, taking up and delivering, and/or for rotating such an engaged product.

8. A gripper according to any one of the preceding claims, **characterized in that** together, the strips compose a single endless strip, wherein the strip is guided by the drive system which comprises an assembly of rollers and guides, wherein at least one roller is driven.

9. A gripper according to any one of the preceding claims, **characterized in that** at least one roller or guide is movable relative to the other one(s).

10. A gripper according to any one of the preceding claims, **characterized in that** the control is further connected to a camera system for making at least a single image, with which the control controls said engaging and taking up, delivering, and/or rotating.

11. A robot for taking up, transferring and placing delicate products, for instance fruit or vegetables, more particularly apples, pears or cucumbers, with at least a single robot arm, having at its end at least one such gripper according to any one of the preceding claims.

12. A method for engaging, clamping, taking up, conveying, and delivering delicate products (P), for instance fruit or vegetables, more particularly apples, pears or cucumbers, with a gripper (1), wherein the gripper is provided with at least two strips (10a, b), extending substantially in mutually parallel direction, which are independently movable in substantially the said parallel direction, wherein the method comprises the following steps,
(a) moving the strips (10a, b) in a direction of engagement A to a product,
(b) positioning the strips adjacent corresponding sides of the product,
(c) then clamping the product between the said strips;
(d) after this, in a take-up direction T, directed substantially opposite to the direction of engagement, moving at least one of the said strips,
(e) moving the gripper with the taken up product to a set delivery position;
(f) delivering the product.

13. A method according to claim 12, **characterized in that** clamping takes place by sliding the strips over the product in a clamping manner.

14. A method according to claim 12, **characterized in that** clamping takes place by moving the strips towards each other, whereby the product is clamped between the strips.

15. A method according to claim 12, **characterized in that** delivering comprises moving the strips apart.

16. A method according to claim 12, **characterized in that** delivering comprises moving at least one of the strips in the direction of engagement.

17. A method according to claim 12, **characterized in that** delivering comprises a combination of the features according to claims 13 - 14.

18. A method according to any one of claims 12 - 17, **characterized in that** the method further comprises rotating the taken up product, whereby the said strips are moved relative to each other at different speeds.

19. A method according to any one of claims 12 - 17, **characterized in that** the method is carried out with the gripper according to any one of claims 1-11.

## Patentansprüche

1. Greifer zum Greifen, Klemmen, Aufnehmen und Abgeben empfindlicher Produkte (P), beispielsweise Obst oder Gemüse, insbesondere Äpfel, Birnen oder Gurken, bei dem jedes Produkt mit dem Greifer (1) aus einer im Wesentlichen horizontalen, liegenden Position aufgenommen wird, bei dem der Greifer (1) zumindest zwei Erfässungsflächen aufweiset und bei dem nach dem Erfassen und Aufnehmen das Produkt mit dem Greifer an mindestens zwei Kontaktstellen in Kontakt ist,
**dadurch gekennzeichnet,**
**dass** an den Kontaktstellen der Greifer mindestens zwei Angriffsstreifen (10a, b) aufweist, die zueinander parallel und einander gegenüber verlaufen und die mit einem Antriebssystem verbunden sind, mittels welchem die beiden Streifen unabhängig voneinander derart angetrieben sind, dass sie im Wesentlichen in der parallelen Richtung bewegbar sind.

2. Greifer nach Anspruch 1, **dadurch gekennzeichnet, dass** die Streifen über zumindest ein einzelnes Paar zweier Materialenden (3a, b) geführt sind, die sich einander gegenüber als Finger (2a, b) erstrecken, wobei die Finger zum Erfassen bzw. Abgeben aufeinander zu oder bzw. voneinander weg bewegbar sind.

3. Greifer nach Anspruch 2, **dadurch gekennzeichnet, dass** die Finger Enden in Gestalt von Führungsrollen zum Führen der Streifen umfassen.

4. Greifer nach einem der vorangehenden Ansprüche, **dadurch gekennzeichnet, dass** die Finger in der Parallelrichtung gegeneinander bewegbar sind.

5. Greifer nach einem der vorangehenden Ansprüche, **dadurch gekennzeichnet, dass** drei Streifen vorhanden sind, wobei die Enden der Streifen, die für das Erfassen und Aufnehmen vorgesehen sind, auf einem Kreis in einer Ebene angeordnet und auf diesem im Wesentlichen gleichmäßig verteilt sind.

6. Greifer nach Anspruch 5, **dadurch gekennzeichnet, dass** auf dem Kreis die Enden unter gegenseitigen Winkeln von im Wesentlichen 120 Grad stehen.

7. Greifer nach einem der vorangehenden Ansprüche, **dadurch gekennzeichnet, dass** der Greifer ferner mit einer Steuerung zur Steuerung des Antriebssystems verbunden ist, wobei die Streifen zum Erfassen, Einklemmen, Aufnehmen und Abgeben und/oder zur Drehung eines erfassten Produkts beweglich sind.

8. Greifer nach einem der vorangehenden Ansprüche, **dadurch gekennzeichnet, dass** die Steifen zusammen einen einzigen endlosen Streifen bilden, wobei der Streifen von dem Antriebssystem geführt ist, welches eine Anordnung von Rollen und Führungen umfasst, wobei zumindest eine Rolle angetrieben ist.

9. Greifer nach einem der vorangehenden Ansprüche, **dadurch gekennzeichnet, dass** zumindest eine Rolle oder Führung gegenüber den anderen beweglich ist.

10. Greifer nach einem der vorangehenden Ansprüche, **dadurch gekennzeichnet, dass** die Steuerung ferner mit einem Kamerasystem zur Aufnahme mindestens eines einzelnen Bildes verbunden ist, mittels dessen die Steuerung das Erfassen und Aufnehmen, Abgeben und/oder Drehen steuert.

11. Roboter zum Aufnehmen, Überführen und Absetzen empfindlicher Produkte, beispielsweise Obst oder Gemüse, insbesondere Äpfel, Birnen oder Gurken mit mindestens einem einzelnen Roboterarm, der an seinem Ende mindestens einen Greifer nach einem der vorangehenden Ansprüche aufweist.

12. Verfahren zum Erfassen, Einklemmen, Aufnehmen, Fördern und Abgeben empfindlicher Produkte (P), beispielsweise Obst oder Gemüse, insbesondere Äpfel, Birnen oder Gurken mittels eines Greifers (1) wobei der Greifer mit mindestens zwei Streifen (10a, b) versehen ist, die sich im Wesentlichen in ein ineinander parallelen Richtungen erstrecken und die im Wesentlichen in dieser parallelen Richtung unabhängig voneinander bewegbar sind, wobei das Verfahren die folgenden Schritte umfasst
a) Bewegen der Streifen (10a, b) in einer Erfassungsrichtung A auf ein Produkt hin,
b) Positionierung der Streifen nahe einander entsprechenden Seiten des Produkts;
c) dann Einklemmen des Produkts zwischen den Streifen;
d) Anschließend Bewegen mindestens eines der Streifen in einer Aufnahmerichtung T, die der Erfassungsrichtung im Wesentlichen entgegengesetzt ist;
e) Bewegen des Greifers mit dem aufgenommenen Produkt in eine eingestellte Abgabeposition;
f) Abgeben des produkts.

13. Verfahren nach Anspruch 12, **dadurch gekennzeichnet, dass** das Einklemmen durch Vorschieben der Streifen über das Produkt auf eine klemmende Weise geschieht.

14. Verfahren nach Anspruch 12, **dadurch gekennzeichnet, dass** das Klemmen **dadurch** geschieht, dass die Streifen gegeneinander bewegt werden und das Produkt zwischen den Streifen eingeklemmt wird.

15. Verfahren nach Anspruch 12, **dadurch gekennzeichnet, dass** das Abgeben einer Auseinanderbewegung der Streifen umfasst.

16. Verfahren nach Anspruch 12, **dadurch gekennzeichnet, dass** das Abgeben ein Bewegen wenigstens eines der Streifen in der Erfassungsrichtung umfasst.

17. Verfahren nach Anspruch 12, **dadurch gekennzeichnet, dass** das Abgeben eine Kombination der Merkmale der Ansprüche 13 und 14 umfasst.

18. Verfahren nach einem der Ansprüche 12 bis 17, **dadurch gekennzeichnet, dass** das Verfahren eine Drehung des aufgenommenen Produkts umfasst, wobei die Streifen gegeneinander bei verschiedenen Geschwindigkeiten bewegt werden.

19. Verfahren nach einem der Ansprüche 12 bis 17, **dadurch gekennzeichnet, dass** das Verfahren mit einem Greifer nach einem der Ansprüche 1 bis 11 ausgeführt wird.

## Revendications

1. Elément de préhension pour saisir, bloquer, ramasser et délivrer des produits délicats (p), par exemple, des fruits ou des légumes, plus particulièrement des pommes, des poires ou des concombres, dans lequel chaque produit est ramassé par l'élément de préhension (1) depuis une position sensiblement horizontale, dans lequel l'élément de préhension (1) comprend au moins deux surfaces d'engagement et dans lequel, lors de l'engagement et du ramassage, le produit est en contact avec l'élément de préhension à l'emplacement d'au moins deux points de contact,
**caractérisé en ce que**,
à l'emplacement des points de contact, l'élément de préhension comprend au moins deux bandes d'engagement (10a, b), s'étendant sensiblement parallèlement l'une à l'autre et en regard l'une de l'autre, dans lequel ces bandes (10a, b) sont raccordées à un système d'entraînement avec lequel chacune des deux bandes est indépendamment entraînée pour pouvoir être déplacée sensiblement dans ladite direction parallèle.

2. Elément de préhension selon la revendication 1, **caractérisé en ce que** lesdites bandes sont guidées sur au moins une seule paire de deux extrémités de matériau (3a, b) s'étendant en regard l'une de l'autre sous la forme de doigts (2a, b) qui peuvent se déplacer l'un vers l'autre et en sens inverse pour s'engager et se libérer, respectivement.

3. Elément de préhension selon la revendication 2, **caractérisé en ce que** les doigts comprennent des extrémités sous la forme de galets de guidage pour guider lesdites bandes.

4. Elément de préhension selon l'une quelconque des revendications précédentes, **caractérisé en ce que** les doigts peuvent se déplacer l'un par rapport à l'autre dans ladite direction parallèle.

5. Elément de préhension selon l'une quelconque des revendications précédentes, **caractérisé en ce que** trois bandes sont incluses, dans lequel les extrémités des bandes destinées audit engagement et audit ramassage sont placées sur un cercle dans un plan et distribuées de manière sensiblement uniforme sur celui-ci.

6. Elément de préhension selon la revendication 5, **caractérisé en ce que**, dans le cercle, les extrémités font des angles mutuels de sensiblement 120 °.

7. Elément de préhension selon l'une quelconque des revendications précédentes, **caractérisé en ce que** l'élément de préhension est en outre raccordé à un dispositif de commande pour commander le système d'entraînement, dans lequel les bandes peuvent être déplacées pour s'engager sur un produit, le bloquer, le ramasser et le délivrer et/ou pour faire tourner un tel produit engagé.

8. Elément de préhension selon l'une quelconque des revendications précédentes, **caractérisé en ce que** bandes forment ensemble une seule bande sans fin, dans lequel la bande est guidée par le système d'entraînement qui comprend un ensemble de galets et de guides, dans lequel au moins un galet est entraîné.

9. Elément de préhension selon l'une quelconque des revendications précédentes, **caractérisé en ce qu'**au moins un galet ou guide est mobile l'une par rapport à l'autre ou aux autres.

10. Elément de préhension selon l'une quelconque des revendications précédentes, **caractérisé en ce que** le dispositif de commande est en outre raccordé à un système d'appareil photo pour prendre au moins une image unique, avec laquelle le dispositif de commande commande lesdits engagement et ramassage, délivrance et/ou rotation.

11. Robot pour ramasser, transférer et placer des produits délicats, par exemple des fruits ou des légumes, plus particulièrement des pommes, des poires ou des concombres, avec au moins un seul bras de robot, ayant à son extrémité au moins un tel dispositif de préhension selon l'une quelconque des revendications précédentes.

12. Procédé pour s'engager sur des produits délicats (p), les bloquer, les ramasser, les transporter et les délivrer, par exemple des fruits ou des légumes, plus particulièrement des pommes, des poires ou des concombres, avec un élément de préhension (1), dans lequel l'élément de préhension est muni d'au moins deux bandes (10a, b) s'étendant sensiblement dans une direction parallèle l'une à l'autre, qui sont indépendamment mobiles sensiblement dans ladite direction sensiblement parallèle, dans lequel le procédé comprend les étapes consistant à :
(a) déplacer les bandes (10a, b) dans une direction d'engagement A avec un produit,
(b) positionner les bandes de manière adjacente aux côtés correspondants du produit,
(c) bloquer ensuite le produit entre lesdites bandes ;
(d) puis, dans un sens de ramassage T, dirigé sensiblement à l'opposé du sens d'engagement, déplacer au moins l'une desdites bandes,
(e) déplacer l'élément de préhension avec le produit ramassé dans une position de délivrance réglée ; et
(f) délivrer le produit.

13. Procédé selon la revendication 12, **caractérisé en ce que** le blocage a lieu en faisant glisser les bandes sur le produit par blocage.

14. Procédé selon la revendication 12, **caractérisé en ce que** le blocage a lieu en déplaçant les bandes l'une vers l'autre, de sorte que le produit soit bloqué entre les bandes.

15. Procédé selon la revendication 12, **caractérisé en ce que** la délivrance comprend la séparation des bandes.

16. Procédé selon la revendication 12, **caractérisé en ce que** la délivrance comprend le déplacement d'au moins l'une desdites bandes dans le sens d'engagement.

17. Procédé selon la revendication 12, **caractérisé en ce que** la délivrance comprend une combinaison des caractéristiques selon les revendications 13 à 14.

18. Procédé selon l'une quelconque des revendications 12 à 17, **caractérisé en ce que** le procédé comprend en outre la rotation, du produit ramassé, de sorte que lesdites bandes soient déplacées l'une par rapport à l'autre à différentes vitesses.

19. Procédé selon l'une quelconque des revendications 12 à 17, **caractérisé en ce que** le procédé est effectué avec l'élément de préhension selon l'une quelconque des revendications 1 à 11.
